# EUROPEAN PATENT APPLICATION

(11) **EP 1 296 273 A2**
(43) Date of publication of application: **26.03.2003**
(21) Application number: 02256572.5
(22) Date of filing: 20.09.2002
(51) Int. Cl.: G06F 17/60

(54) **Apparatus and automated method of contract drafting**

(30) Priority: 21.09.2001 GB 0122862
(71) Applicant: HEWLETT-PACKARD COMPANY, Palo Alto, California 94304-1181 (US)
(72) Inventor: Salle, Mathias Jean René, Palo Alto, CA 94306 (US); Boulmakoul, Abdel, Bristol BS6 5JJ (GB); Morciniec, Michal, Clifton, Bristol BS8 2DW (GB)
(74) Representative: Lawrence, Richard Anthony

(57) **Abstract**

At present, there does not seem to be an expedient and reliable automated way of constructing contracts as existing automated systems only allow the searching and cross-referencing of documents. They do not cater for the process of constructing a contract. Accordingly the invention provides an apparatus and automated method of drafting contracts in a structured model-based manner, re-using existing information. A drafting tool assigns appropriate values to descriptors as defined by a chosen formal contract model. A formatter downloads a layout model and tools from a modeller for creating a structured textual contract on the basis of a contract image stored in an image repository. Reference tags generated by an encoder are used for associating the descriptors of the formal contract to the descriptors of the structured textual contract. The encoder then assembles the required contract according to the descriptors using the drafting tool.

## Description

The present invention relates to an apparatus and automated method of contract drafting, and in particular to apparatus and a method for constructing contracts in a structured model-based manner, reusing existing information.

Contracts need to be constructed in a given context that is established, in some instances, by existing contract history. Human experts construct new contracts in a largely informal manner ensuring consistency with "background" information. Contracts are typically written by legal persons, and as the process of constructing a contract is labour intensive it can become a costly affair for the client.

At present, however, there does not seem to be an expedient and reliable automated way of constructing contracts. Existing automated systems only allow the searching and cross-referencing of documents. They do not cater for the process of constructing a contract.

The present invention seeks to address or significantly mitigate one or more of the afore-mentioned problems.

According to a first aspect of the invention there is provided an apparatus for the automated drafting of a contract, comprising: an image repository for storing an electronic file of an image of the paper-based contract; a modeller for storing descriptors for a formal contract model, for storing a layout model and tools for enabling the contract to be formatted and displayed according to the layout model; a drafting tool for assigning the most appropriate values to the descriptors as defined by the formal contract model with which they are associated; a formatter for downloading the layout model and tools from the modeller, for creating a structured textual contract on the basis of the contract image and for storing the structured textual contract; an encoder for encoding parameters according to the descriptors published in a formal contract model repository, and generating reference tags for associating the descriptors for a formal contract to descriptors for the structured textual contract, the encoder adapted for assembling the contract according to the descriptors using the drafting tool.

According to a second aspect of the invention there is provided an automated method of drafting a contract, comprising the steps: accessing the image of a contract from a contract image repository; downloading a layout model and a layout tool for displaying a contract formatted according to the layout model; creating a structured textual contract from the image of the contract using the layout model and the layout tool; accessing, through an encoder, descriptors for a formal contract stored in a formal contract model repository; encoding contract parameters using the structured textual contract and in accordance with the descriptors for the formal contract; inking the descriptors for the formal contract to the descriptors for the structured textual contract by means of reference tags; assigning values to the descriptors as determined by a drafting tool on the basis of allowable values defined by a formal contract model stored in the formal contract model repository; and assembling the required formal contract using the encoder and in accordance with the formal contract model.

According to a third aspect of the invention there is provided a method of carrying out a contract simulation for a potential party to a contract that is the subject of the simulation, comprising the steps:
(a) selecting the name of the contract role from whose perspective the simulation will be run;
(b) selecting a statement from a number of available contract statements;
(c) assigning contract roles to the model evaluation tool apart from the contract role from whose perspective the simulation will be run;
(d) sending commitment messages to the contract roles assigned to the model evaluation tool as selected by the potential party;
(e) sending an allowable response in reply to the message received by a benefiting contract role as selected at random by the model evaluation tool;
(f) activating commitments depending on the response received and commitment condition specified;
(g) alerting the potential party if any commitments exist and repeating the steps (d) to (f) if they do; otherwise
(h) ending the simulation.

According to a fourth aspect of the invention, there is provided a method of scoring contracts and clauses based on receipt of messages from contract parties referring to formal contract descriptors, comprising the steps: retrieving an existing score for the indicated contract and clauses from a contract scorer; updating the score according to a complaint score formula; making the scores available in the contract drafting process according to any of the method claims 9 to 13; and affecting the selection of contracts and clauses in the drafting process based on the score.

According to a fifth aspect of the invention, there is provided a computer readable storage medium storing instructions that, when executed by a computer, cause the computer to perform a method according to the second, third and fourth aspects.

The invention replaces the manual unstructured, informal process of contract construction with a formal, model based one, giving the ability to construct contracts in a structured manner, reusing existing information.

Other aspects and features of the present invention will become apparent to those ordinarily skilled in the art upon review of the following description of the specific embodiments of the invention in conjunction with the accompanying figures.

Embodiments of the invention will now be described by way of example only, with reference to the drawings in which:
Figure 1 is a block diagram of an apparatus for automated contract drafting in accordance with a preferred embodiment of the invention:
Figure 2 is an illustration of a specimen contract generated by an embodiment of the present invention, using an XML-based structure and output using a XSL engine; and
Figure 3 is a block diagram of the data structures for a *TechnicalContract* record, a *FormalContract* record, a *FormalStatement* record, a *CommitmentSubject* record, a *ContractProtocolDescriptor* record and a *ContractImage* record, as well as showing the associations there between in accordance with an embodiment of the invention.

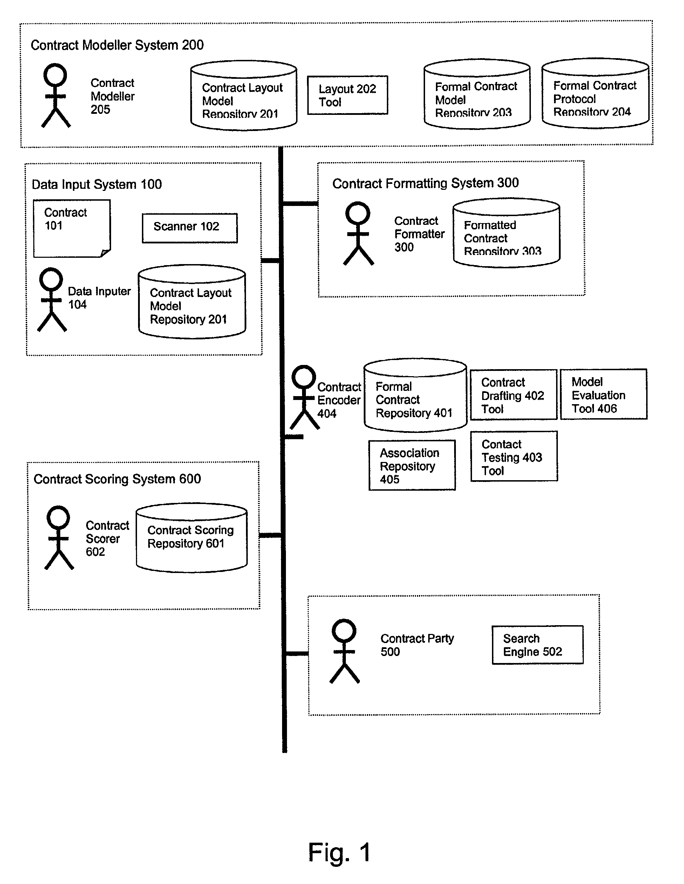

Paper contracts 101 are unstructured and in this form cannot be transmitted or stored in electronic systems. With reference to Figure 1, a Data Input System 100 allows the paper contract to be scanned using a scanning device 102 and the image of the contract in then stored a repository 103. The repository 103 may be made available to users over a communication network 700 allowing for search and retrieval of images of contracts. Alternatively, if the paper contract was generated using a word processor, the electronic file of the contract may be copied directly to the repository 103.

A Contract Modeller 205 using a system 200 makes layout models for contracts available through a repository 201, as well as a tool 202 that allows a contract formatted according to the layout model to be displayed. The layout model and tools 202 are made available to users through the repository 201.

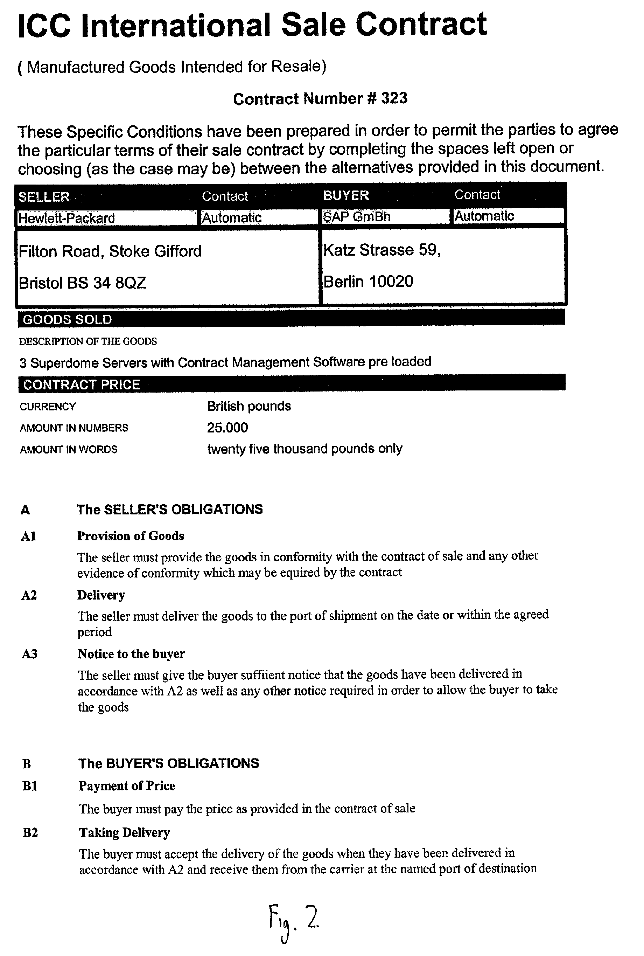

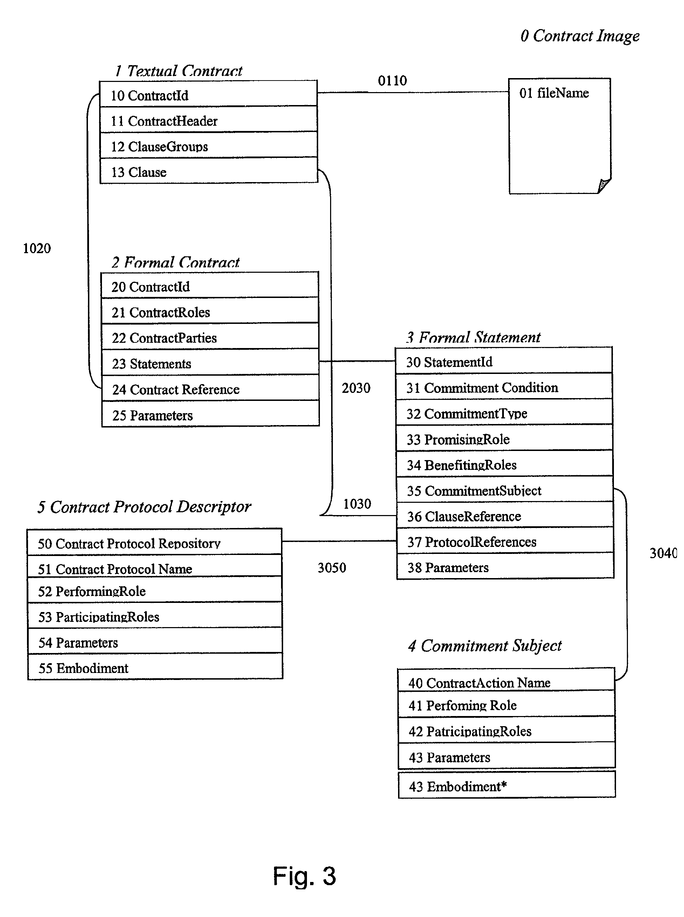

A Contracts Formatter 300 downloads the layout model and tools 202, and creates a structured textual contract on the basis of the contract image. A simple descriptor that allows the contract to be structured is shown in Figure 3 as a Textual Contract record 1. The Contracts Formatter 300 then makes the structured, textual contract available through a repository 303. As an example, Figure 2 shows an XML based structure of the contract based on the descriptor 1 shown in Figure 3. An XSL engine has been used to output the contract shown in Figure 2. The Contract Formatter 300 may store a reference 0110 that allows users of the structured textual contracts to retrieve the original images of the contracts. Alternatively, storage may be provided as a service run by a well-known central entity such as a Contract Scorer 602.

Contracts contain a number of parameters such as dates when performance of obligations is required, the price of the contract, and the names of contract parties. In paper contracts these parameters are spaces which can be filled out when parties make an agreement. In formal contracts these parameters are represented as descriptions that can be decoded by IT systems to provide automation or support for human based processes.

The Contract Modeller 205 publishes the descriptions for formal contracts in a repository 203. The repository 203 is accessible to a Contract Encoder 404 that uses the encoding system 400 to encode contract parameters according to the descriptions published by the Modeller 205. A preferred embodiment for a formal contract is shown in Figure 3. The Contract Encoder 404 uses the structured textual contract produced by the Contract Formatter 300, or retrieves a suitable structured textual contract from the Contract Scorer 602.

The Contract Encoder 404 links the descriptors for the formal contract to structured textual contract descriptors by providing associations 1020 and 1030. The formal contract model defines allowable values that can be assigned to each descriptor. During the encoding of a specific contract, descriptors are assigned the most appropriate values which the model defines using a Contract Drafting Tool 402. The formal contract is made available through the repository 401. Alternatively, the storage may be provided as a service by a well-known central entity such as Contract Scorer 602.

The contract parties 500 can search the Internet for the most appropriate contract using the search engine 502. They can locate Contract Scorers 602 and search their repositories 601, or Contract Encoders 404 and browse the repositories 401 that they provide.

### Contract Drafting

The Contract Encoder 404 assembles an electronic contract (e-contract) according to the model published in the repository 203 using the drafting tool 402 that is provided by the contract modeller 205.

The e-contract contains the text of the original contract structured into Clause Groups and Clauses stored in a *Textual*/*Contract* record 1. There is a corresponding *Formal*/*Contract* record 2 that is associated through the reference 1020 to the *Textual*/*Contract* record. This reference is stored in the field 24 of the *Textual*/*Contract* record allowing for retrieval of the human readable *Textual*/*Contract* record that corresponds to a machine readable *Formal*/*Contract* record.

The *Formal*/*Contract* record has a field 21 that lists the contract roles (such as Buyer, Seller) and a field 22 indicating the contract parties (such as Hewlett-Packard and Wal-Mart) that will be fulfilling the contract roles. Furthermore, a field 23 lists pointers 2030 to *Formal Statement* records. The field 23 may be linked with a field 12 to associate a group of *Formal Statement* records with a description of a clause group.

The *Formal Statement* record models commitment that will exist between contract roles 21 and therefore contract parties 22. Each statement can be identified within the context of a contract by a field 30. Field 31 gives a condition under which the commitment will arise for example "Current Date equals 30 August 2001".

A field 32 lists the type of the commitment (e.g. Obligation, Prohibition, Permission, Right etc). A field 33 specifies the contract role that is promising to undertake the commitment and a field 34 lists all contract roles who benefit from or have an interest in the commitment. Field 35 is a pointer, corresponding to an association 3040, to a record *Commitment Subject* that describes the subject of commitment between roles 33 and 34. The *Formal Statement* record has a clause reference field 36 that contains a pointer to a textual description of the clause held in the field 13. The *Commitment Subject* record specifies the name of the contract action in a field 40. Parameters relevant to the action are listed in a field 43. The contract role responsible for the action performance is listed in field 41, and contract roles that are required to participate in the action are listed in a field 42.

### Contract Protocol Descriptor

Contract Protocol Descriptors are provided by the Contract Modeller 205 and may be retrieved from a public repository 204. An example of a Contract Protocol Description record 5 is shown in Figure 3. Field 50 encodes the name of the repository, field 51 contains the name of the protocol, the name of the provider and the name of the locator of the repository. Field 52 gives the name of the role in the protocol, such as Promisor. Field 53 specifies the role names such as Promisee, that will be participating in the protocol. Field 54 lists the parameters of the protocol such as message formats and time-out periods. Finally, field 55 contains the implementation data for the protocol. A computerised system such as a messaging system can be configured with the implementation data and will subsequently communicate according to the protocol description. Details of such are protocol are provided in the assignee's copending European Patent Application of even date entitled "Apparatus and Method for Binding Business Protocols to Contract Actions".

The textual contract clauses are modelled by the Encoder 404 using formal statements. The form and the semantic of the statement is limited by the model used. To aid the Encoder 404 in choosing the best combination of values for e-contract descriptors, the formal model includes textual strings with each descriptor that change depending on values assigned to the individual descriptor or values of related descriptors. Consequently, given the values assigned to records 3 and 4 text can be generated. For example consider the following assigned values:

| *3 Formal Statement* | |
|---|---|
| 31 Commitment Condition | CurrentDate ==23-Aug-2001 |
| 32 CommitmentType | Obligation |
| 33 PromisingRole | Seller |
| 34 BenefitingRole | Buyer |
| 35 Commitment Subject | Deliver |
| 36 ClauseReference | 2 |
| 37 ProtocolReferences | ObligationProtocol |
| 38 Parameters | ShippingDocument, Commitment State |
| | |

| *4 Commitment Subject* | |
|---|---|
| 40 ContractAction Name | Deliver |
| 41 PerformingRole | Seller |
| 42 ParticipatingRoles | Buyer |
| 43 Parameters | ShippingDoc.xml |
| 44 Embodiment * | [code] |

from which the following text is generated:

On 23-Aug-2001 the Seller is obliged to Buyer to see to it that Seller carries out action Deliver with participation of Buyer so that ShippingDocument==ShippingDoc.xml

The descriptor types and values determine the parts of the text (marked in bold font) that make up a textual statement. As a modification consider that the Encoder 404 does not enter values for descriptors directly. The Encoder 404 is presented with a list of allowed text fragments and selects the text fragment or sequence of text fragments values to assign to the descriptors.

### Testing Tool for E-Contract

The contract model may define rules that determine if two statements are in conflict. For example the contract model shown in Figure 3 defines that two statements are in conflict if the commitment subject 4 of the two statements are identical and commitment conditions 31 are the same, and commitment type 32 of one statement is Obligation and commitment type of the second statement is Prohibited. These rules can be encoded into the contract testing tool 403 so that a warning is given to the user when a conflict is detected.

The testing tool allows for contract scenario generation. Once a contract protocol is selected and assigned to field 37, the commitment condition can be specified on a Commitment State parameter specified in field 38 using the protocol states specified in field 54 of the Protocol descriptor record. A typical simulation carried out by the model evaluation tool 404 is as follows:
1) User selects the name of the contract role he wants to play in the contract.
2) User selects a statement from the number of statements available.
3) The tool assumes the contract roles listed in field 34.
4) According to the contract protocol indicated in field 37 of the statement, the user is presented with a set of messages he can send to roles listed in field 34.
5) The model evaluation tools then select at random an allowable response from the BenefitingRole according to the protocol specified in field 37.
6) Depending on the message returned, other commitments can be activated depending on the commitment condition 31 specified.
7) User is alerted about the existence of new commitments and the simulation goes back to step 4, or finishes if no new commitments have been activated and the commitment state is a terminal state of the protocol.

The simulation can be re-run to continue exploration of contract scenarios associating Contract Protocols with Individual Statements

The Contract Encoder 404 determines on the basis of the field 32 which protocol should be used to communicate with the contract 500 party about the commitment. The Contract Encoder 404 can obtain a list of all available protocols from repository 204 of protocols. The contract drafting tool 402 can suggest a protocol based on the values that have been entered into the fields of the record 3, and on associations made in the past by the Encoder 404. The Contract Encoder 404 makes a selection creating an association 3050 that links the descriptor of the protocol with corresponding formal statements. The association repository 405 is then updated.

The contract parties 500 download formal and structured e-contracts and after binding concrete business protocols to them (for example, as proposed in the assignee's copending European Patent Application of even date entitled "Apparatus and Method of Communicating Changes in States of Contractual Responsibilities"), they thereafter interact according to those protocols. As a modification to the method, Contract Parties 500 can download the contracts from the Contract Scoring System 600 by connecting to the repository 601. The e-contracts in the repository 601 are deposited by the Contract Encoders 404.

If a dispute arises between the parties during the interaction they can send a complaint to the Contract Scorer 602. The Contract Scorer maintains complaint tallies for contracts Cᵢ and clauses Cᵢⱼ as well as the total number of complaints C=Sᵢ Cᵢ and the number of complaints.

The complaint score for a j-th clause in i-th contract is defined as a ratio:
Cᵢⱼ/Cᵢ and the complaint score for a contract is a ratio Sᵢ/Cᵢ

The complaint score can be used to identify "good" contracts and "clauses" and the scores fed back into the drafting system by allowing Contract Encoders 404 to look-up the scores of the clause before assembling the e-contract.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as ROM, or example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

Although the invention has been shown and described with respect to a best mode embodiment thereof, it should be understood by those skilled in the art that the foregoing and various other changes, omissions and additions in the form and detail thereof may be made therein without departing from the scope of the invention as claimed.

## Claims

1. An apparatus for the automated drafting of a contract, comprising:
an image repository (103) for storing an electronic file of an image of a paper-based contract;
a modeller (200) for storing descriptors for a formal contract model, for storing a layout model and tools for enabling the contract to be formatted and displayed according to the layout model;
a drafting tool (402) for assigning the most appropriate values to the descriptors as defined by the formal contract model with which they are associated;
a formatter (300) for downloading the layout model and tools from the modeller (205), for creating a structured textual contract on the basis of the contract image and for storing the structured textual contract; and
an encoder (404) for encoding parameters according to the descriptors published in a formal contract model repository (203), and generating reference tags (1020) for associating the descriptors for a formal contract to descriptors for the structured textual contract, the encoder adapted for assembling the contract according to the descriptors using the drafting tool.

2. An apparatus according to claim 1, wherein the modeller comprises:
a contract layout model repository (201) for storing the layout model;
a layout tool (202) for enabling the contract to be formatted and displayed according to a layout model, the layout tool being associated with the contract layout model repository; and
the formal contract model repository (203) for storing descriptors for a formal contract model.

3. An apparatus according to claim 1 or 2, wherein the formatter comprises:
a formatted contract repository (303) for storing the structured textual contract.

4. An apparatus according to any one of claims 1 to 3, wherein the modeller (200) further comprises:
an image reference tag (0110) for associating the structured textual contract to the original image of the contract.

5. An apparatus according to any one of claims 1 to 4, wherein the encoder (404) comprises:
a formal contract repository (401) for storing the formal contract.

6. An apparatus according to any one of claims 1 to 5, further comprising:
a testing tool (403) for interrogating the contract for conflicting statements.

7. An apparatus according to any one of claims 1 to 6, further comprising:
a model evaluation tool (406) for carrying out simulations of the contract from the perspective of a user-selected contract role.

8. An apparatus according to claim 7, wherein the testing tool (403) is capable of generating contract scenarios when used in conjunction with the model evaluation tool (406).

9. An automated method of drafting a contract, comprising the steps:
accessing the image of a contract from a contract image repository;
downloading a layout model and a layout tool (202) for displaying a contract formatted according to the layout model;
creating a structured textual contract from the image of the contract using the layout model and the layout tool (202);
accessing, through an encoder (404), descriptors for a formal contract stored in a formal contract model repository (401);
encoding contract parameters using the structured textual contract and in accordance with the descriptors for the formal contract;
linking the descriptors for the formal contract to the descriptors for the structured textual contract by means of reference tags (1020);
assigning values to the descriptors as determined by a drafting tool (402) on the basis of allowable values defined by a formal contract model stored in the formal contract model repository (203); and
assembling the required formal contract using the encoder (404) and in accordance with the formal contract model.

10. A method according to claim 9, further comprising the step:
storing the structured textual contract in a formatted contract repository (303);

11. A method according to claim 9 or 10, further comprising the step:
associating the structured textual contract to the image of the contract by means of an image reference tag (0110).

12. A method according to any one of claims 9 to 11, further comprising the step:
storing the assembled formal contract in a formal contract repository (401).

13. A method according to any one of claims 9 to 12, wherein any of the steps may be carried out by distributed entities which are accessible to one another through a communication network (600).

14. A method of carrying out a contract simulation for a potential party (500) to a contract that is the subject of the simulation, comprising the steps:
(a) selecting the name of the contract role from whose perspective the simulation will be run;
(b) selecting a statement from a number of available contract statements;
(c) assigning contract roles to the model evaluation tool (406) apart from the contract role from whose perspective the simulation will be run;
(d) sending commitment messages to the contract roles assigned to the model evaluation tool (406) as selected by the potential party (500);
(e) sending an allowable response in reply to the message received by a benefiting contract role as selected at random by the model evaluation tool (406);
(f) activating commitments depending on the response received and commitment condition specified;
(g) alerting the potential party (500) if any commitments exist and repeating the steps (d) to (f) if they do; otherwise
(h) ending the simulation.

15. A computer readable storage medium storing instructions that, when executed by a computer, cause the computer to perform a method of drafting a contract according to any one of claims 9 to 12.

16. A computer readable storage medium storing instructions that, when executed by a computer, cause the computer to perform a method of carrying out a contract simulation for a potential party to a contract that is the subject of the simulation according to claim 14.

17. A method of scoring contracts and clauses based on receipt of messages from contract parties (500) referring to formal contract descriptors, comprising the steps:
retrieving an existing score for the indicated contract and clauses from a contract scorer (602);
updating the score according to a complaint score formula;
making the scores available in the contract drafting process according to any of the method claims 9 to 13; and
affecting the selection of contracts and clauses in the drafting process based on the score.

18. A computer readable storage medium storing instructions that, when executed by a computer, cause the computer to perform a method of scoring contracts and clauses based on receipt of messages from Contract Parties according to claim 17.
